# EUROPEAN PATENT SPECIFICATION

(11) **EP 4 587 618 B1**
(45) Date of publication and mention of the grant of the patent: **04.11.2026**
(21) Application number: 23765252.4
(22) Date of filing: 05.09.2023
(51) Int. Cl.: C25B 9/19, C25B 9/65

(54) **ELECTROLYSIS CELL**
ELEKTROLYSEZELLE
CELLULE D'ÉLECTROLYSE

(30) Priority: 15.09.2022 EP 22195950
(43) Date of publication of application: 23.07.2025
(73) Proprietor: thyssenkrupp nucera AG & Co. KGaA, 44269 Dortmund (DE)
(72) Inventor: TOROS, Peter, 45326 Essen (DE); AUSTENFELD, Sebastian, 59494 Soest (DE)
(86) International application number: PCT/EP2023/074299
(87) International publication number: WO 2024/056463

(56) References cited:
- WO-A1-2014/167048
- DE-A1- 102019 219 027
- US-A- 4 732 660
- US-A1- 2003 047 446
- US-B1- 6 282 774

## Description

### Background of the invention

The invention relates to an electrolysis cell according to the preamble of claim 1.

Electrolysis cells for large-scale production of hydrogen by alkaline water electrolysis or chlorine by chlor-alkali electrolysis are typically stacked in an electrolyzer being electrically connected in series. The outmost cells of the cell stack of the electrolyzer are connected to a power source, while the electrodes of adjacent cells within the stack are electrically connected to each other, forming bipolar electrodes within the electric field of the power source.

From EP 0 500 505 A1 an electrolyzer of the so-called filter press configuration having such bipolar elements is known. In this filter press configuration, frames providing back walls of the cells, half-electrodes, intermediate frames and separators are stacked, wherein the electrodes extend at one side to the outside of the frames. Neighboring electrodes are connected to each other outside of the cells e.g. by bolting. This has the advantage that the electrolyzer can be manufactured without weldings. However, the known configuration has the disadvantage of an uneven current distribution across the electrodes as the electrically current enters and exits the electrode sheets only on one side. At high current densities, this leads to a comparatively low degree of efficiency of the cell and a rapid degeneration of the separators in the most loaded regions of the electrodes.

Therefore, it has become a favored design to directly connect the electrodes of adjacent cells in the stack at several positions distributed over the electrode area via the associated back wall of the cell. Such a configuration is for example known from EP 3 778 991 A1 that describes an electrolysis vessel for alkaline water electrolysis. The anodes and the cathodes are fixed and held by electroconductive ribs within the anode chamber and the cathode chamber, respectively, wherein the electroconductive ribs protrude from the separating back walls of the respective chamber. US 2011/0259735 A1 describes a generally similar design, with a zero-gap configuration, however, in which an elastic conductive element is interposed between the current distributor fixed to the back wall and a flexible planar cathode that is kept in contact with the separator. In generalized terms, the typical cell design thus comprises two cell elements each defining an electrode chamber, in which an electrode and an electrode support unit is accommodated. The electrode support unit provides an electrical connection between the back wall and the electrode.

In order to fix the electrodes within the cell and to secure the electrical contact between the back wall and the associated electrode permanently within the corrosive environment within the cell, the electrode is welded to the electrode support unit, which itself is welded to the back wall of the cell. Thus, the current path from the back wall to the electrode can be guaranteed for years of operating time by the firm material bond between the components of the cell. However, welded connections have the disadvantage that they are labor intensive to produce and result in high manufacturing costs. Moreover, after some years of service, electrolysis cells need to be refurbished, wherein the coating of the electrodes has to be renewed. Thus, for refurbishment the electrodes have to be separated from the support units again, which is difficult for welded connections and involves the risk of damaging the welded components. Moreover, welding requires a minimum sheet thickness of the welding partners in order to ensure leak-tightness of the weld.

US 6 282 774 B1 describes such an electrolysis cell design, in which the electrodes are electrically connected to the rear wall of the respective casings via metal reinforcements. The electroconductive connection between the reinforcements in the form of solid plates and the respective rear wall and anode or cathode is produced by means of a reductive sintering process or welding process.

US 2003/0047446 A1 and WO 2014/167048 A1 disclose so-called zero-gap cell designs with ribs connected to the associated back wall for providing the electrical connection of the back wall to the electrode. In these cell designs elastic elements being positioned between the ribs and the electrodes are used to press the respective electrode against the separator of the cell, which provide for an the electrical connection at the same time.

DE 10 2019 219 027 A1 describes a textile as a spacing means between a housing and an electrode of a zero-gap electrolytic cell. The textile comprises both a mechanical connecting means made of a resilient plastic material and an electrical connecting means which differs from the mechanical connecting means.

### Brief Summary of Invention

The object of the invention is therefore to provide an electrolysis cell for chlor-alkali or alkaline water electrolysis that is suitable for use at high current densities and is easy to manufacture and refurbish at the same time.

This object is achieved by an electrolysis cell according to the features of claim 1.

Hereby, an electrolysis cell for chlor-alkali or alkaline water electrolysis is provided. The electrolysis cell comprises two cell elements. Each of the cell elements defines an electrode chamber by providing a back wall and sidewalls of the electrode chambers. The electrolysis cell further comprises a sheet-like separator that is interposed in a joint between the two cell elements and provides a separating wall between the electrode chambers. In each of the electrode chambers an electrode and an electrode support unit is accommodated, wherein the electrode support units provide an electrical connection between the back wall and the electrode in each of the electrode chambers, and wherein the electrodes are in direct contact with the sheet-like separator. According to the invention at least in one of the electrode chambers, the electrical connection between the back wall and the electrode support unit is provided by means of a surface contact connection.

The surface contact connection according to the invention establishes the electrical connection by a surface contact pressure between the connected cell components, i.e. back wall and the electrode support unit. Thus, any material bond between the connected components is dispensed with. The connected components can be taken apart upon release of the surface pressure. Advantageously, the force exerted on the cell elements to close the cell in the joint of the cell elements during assembly is used simultaneously to establish the surface contact pressure between the connected cell components, and thus to fix the electrode at its mounting position within the cell.

In particular, it is preferred, if the electrode support unit is connected to both, the back wall and the electrode by a surface contact connection. Then, the inventive cell contains at least one half shell that comprises three independent units that are not joined by welding: The cell element, forming the housing of the cell and including all required means for feeding and discharging of operational fluids, the electrode as the electrochemically active unit and the electrode support unit that provides mechanical support for the cell element and the electrode, transfers electric current from the back wall to the electrode and provides sufficient space for equalized supply of operational fluids to the electrode.

Surface contact connections that are easily detachable have high practical benefits not only for cell assembly. Upon opening the cell, e.g. for refurbishment, the connected components become loose again and can be removed individually from the cell. Refurbishment of the cells can be carried out on site by simply replacing the worn parts saving significant costs for downtimes. Further, by making use of non-welded surface contact connections, thinner sheet metal material can be used without the risk of leakages, resulting in a more sustainable cell design.

In preferred embodiments, the electrode chamber, in which the surface contact connection is provided, is an anode chamber of the electrolysis cell comprising an anode as electrode. Of the two electrode chambers, the cathode chamber and the anode chamber, the harsher conditions prevail in the anode chamber due to the oxidizing effect of the electrolysis product produced here, i.e. chlorine or oxygen. Hence, anode chambers and the anodes themselves have particularly high refurbishment requirements and need often be replaced.

In preferred embodiments, the surface contact connection comprises a contact surface that is equipped at least in part with a contact improving coating. In order to prevent corrosion and/or passivation on the contact surfaces and to reduce the contact resistance of the surface contact connection in the corrosive environment of the cell, a contact improving coating may be provided on the contact surfaces of the connection. Preferably, a contact improving coating is used at least in the anode chamber of the electrolysis cell. Preferably, the contact improving coating contains one or more of the materials gold, silver, platinum, ruthenium, palladium and NiV7. In particular, it is preferred if contact improving coatings are provided on both mutually touching contact surfaces of the surface contact connection.

In further preferred embodiments, the contact improving coating is provided on an intermediary coating carrier layer that is attached in a material bond to the back wall and/or the electrode support unit, respectively. An intermediary coating carrier layer is preferred depending on the material combination of coating and base material. For example, an intermediary coating carrier layer made of nickel may be used to apply a coating to an electrode, an electrode support unit or a back wall made from titanium. Another practical reason for a coating carrier layer is to simplify the surface geometry to be coated. While it might be difficult to apply a coating to e.g. an expanded mesh, it is easier and more efficient to apply the coating to a piece of metal with a flat surface structure, e.g. a stripe, a disc or a coin serving as an intermediary coating carrier layer, and to fix that intermediary coating carrier layer to the expanded mesh, e.g. by welding.

In some embodiments, the surface contact connection can be secured by a mechanical joint. The mechanical joint is preferably a separable mechanical joint, in particular a hooked or clamped connection. A mechanical joint in addition to the surface contact connection has the advantage of holding the electrode support unit in place during assembly of the cell in a preassembled state, before a surface contact pressure is applied to the surface contact connection. The main purpose of the mechanical joint is thus to simplify handling of the cell during assembly and mounting within the electrolyzer.

In some embodiments the electrode support unit comprises a truss made of sheet metal strips. A truss of metal strips has the advantage of providing a lightweight support structure that forms a dimensionally stable unit on its own and is capable of carrying high surface pressing forces. Sheet metal strips are further easy to be processed during manufacture.

In other embodiments, the electrode support unit comprises arc springs that are convexly arched towards the electrode to provide a resilient support surface for the electrode. During assembly of the cell, the arc springs are compressed and provide for the contact surface pressure of the surface contact connection.

Preferably, the back wall, the electrode support unit, and or the electrode are made from nickel or titanium, which combine a high degree of efficiency with high endurance within the chemical environment of the cell.

Further advantages of the invention are described in the following with regard to the embodiments shown in the attached drawings.

### Brief Description of Drawings

- Fig. 1A: shows schematically a cross-sectional view of an electrolysis cell according to the invention in an exploded view,
- Fig. 1B: shows schematically the electrolysis cell of Fig. 1 in an assembled state,
- Fig. 2A and 2B: show schematically detailed views of the surface contact connection according to Fig. 1A and 1B having a contact improving coating, without and with an intermediary coating carrier layer, respectively,
- Fig. 3: shows schematically a detailed perspective view of the electrode support unit of the embodiment according to Fig. 1A and 1B that comprises a truss made of sheet metal strips,
- Fig. 4: shows schematically a second embodiment of the electrolysis cell according to the invention, wherein the electrode support unit is connected to both, the back wall and the electrode by a surface contact connection,
- Fig. 5: shows schematically a third embodiment of the electrolysis cell according to the invention, wherein the electrode support unit comprises arc springs that are convexly arched towards the electrode.

### Detailed Description of Invention

In the drawings same parts are consistently identified by the same reference signs and are therefore generally described and referred to only once.

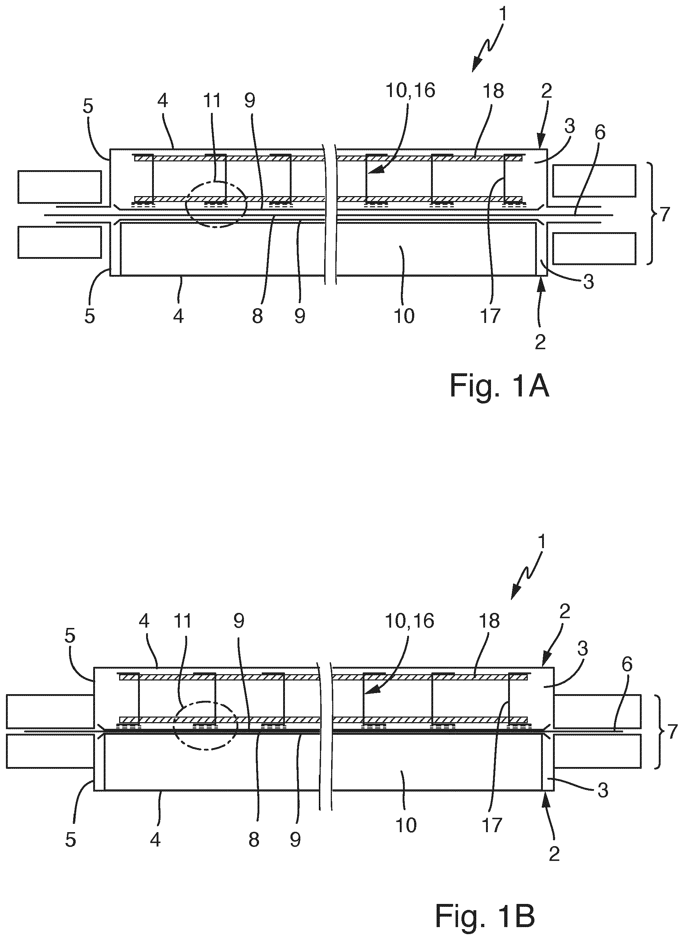

**Fig. 1A and** 1B show a first embodiment of the electrolysis cell 1 according to the invention in a cross-sectional view. Fig. 1A shows the cell 1 in an exploded view, e.g. similar to a state during assembly. Fig. 1B shows the assembled cell. The electrolysis cell 1 is suited for chlor-alkali or alkaline water electrolysis. In operation, the cell is turned to a vertical position. The electrolysis cell is connected to electrolyte circuits via feeders and discharge headers (not shown for simplicity).

The electrolysis cell 1 comprises two cell elements 2. The cell elements 2 form the casing of the cell 1. Each of the cell elements 2 defines an electrode chamber 3 by providing a back wall 4 and sidewalls 5 of the electrode chambers 3. A sheet-like separator 6 is interposed in a joint 7 between the two cell elements 2 and provides a separating wall 8 between the electrode chambers 3. The electrode chambers 3 thus form closed half-cells, delimited by the respective cell element 2 and the separator 6.

In each of the electrode chambers 3, there is accommodated an electrode 9 and an electrode support unit 10. One of the electrode chambers 3 forms the anode chamber of the cell 1, which contains the anode as electrode 9, and the other electrode chamber 3 forms the cathode chamber of the cell 1 that contains the cathode as electrode 9. The electrode chambers 3 differ in the chemical environment they have to withstand due to the different electrochemical reactions that take place at the respective electrode. In general, the anode chamber is exposed to the harsher conditions, due to the oxidative effect of the electrolysis products formed in this chamber, i.e. chlorine in case of chlor alkali electrolysis and oxygen in case of alkaline water electrolysis.

The electrode support units 10 provide an electrical connection between the back wall 4 and the electrode 9 in each of the electrode chambers 3. In the assembled state of the cell (cf. Fig. 1B), the electrodes 9 are in direct touching contact with the sheet-like separator 6. According to the invention, in one of the electrode chambers 3, i.e. the upper one in Fig. 1, the electrical connection between the electrode support unit 10 and the electrode 9 is provided by means of a surface contact connection 11. In this example, the electrical connection of the electrode support unit 10 and the back wall 4 is established by a material bond, e.g. by welding.

As can be seen from Fig. 1B, when the joint 7 is closed during assembly of the cell 1, the electrode support unit 10 mounted, preferably welded, on the back wall 4 is pressed against the electrode 9. The electrode 9 is thus sandwiched between the electrode support unit 10 and the separator 6. A surface contact connection 11 is established between the electrode support unit 10 and the electrode 9.

Preferably, the electrode chamber 3, in which the surface contact connection 11 is provided, is an anode chamber of the electrolysis cell 1 comprising an anode as electrode 9.

Preferably, the back wall 4, the electrode support unit 10, and/or the electrode 9 are made from nickel or titanium.

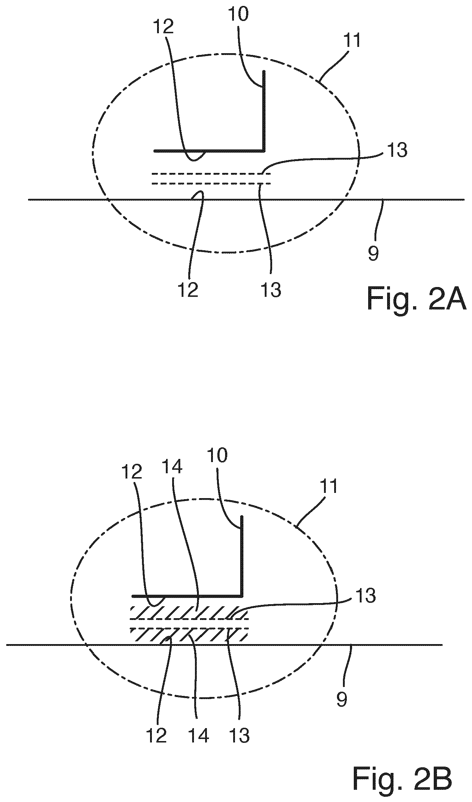

In Fig. 2A the surface contact connection 11 is shown in more detail. The surface contact connection 11 comprises contact surfaces 12 that are equipped with a contact improving coating 13. Thus, the contact improving coatings 13 are provided on both mutually touching contact surfaces 12 of the surface contact connection 11. The contact improving coating 13 is preferably applied to the contact surfaces 12 by electrochemical plating. Other possibilities to apply the coating 13 are e.g. chemical plating or PVD coating. Preferred contact improving coatings 13 contain one or more of the materials gold, silver, platinum, ruthenium, palladium and NiV7. Preferably, contact improving coatings 13 are applied in the anode chamber of the cell 1.

Fig. 2B shows another example of a surface contact connection 11 with a contact improving coating 13. In contrast to Fig. 2A, the contact improving coatings 13 are provided on intermediary coating carrier layers 14 that are attached in a material bond to the electrode support unit 10 and the electrode 9, respectively. Intermediary coating carrier layers 14 are preferably used if an immediate material bonding between the coating 13 and the base material would result in an insufficient adherence of the coating 13 due to the specific material pairing of base material and coating 13. For example, intermediary coating carrier layers 14 made of nickel may serve to promote the adhesion for the aforementioned coating materials.

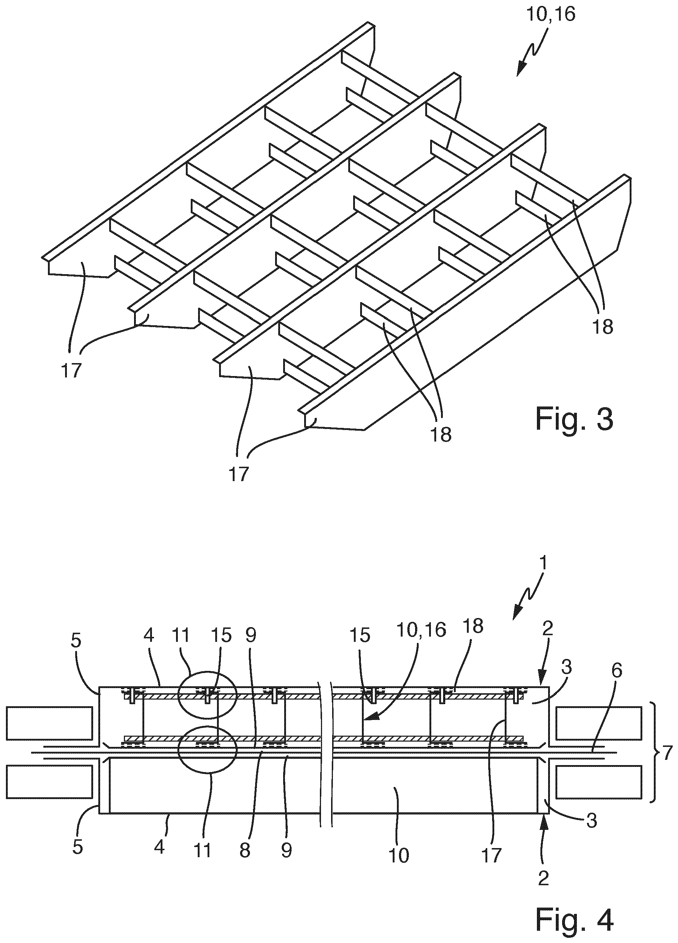

Fig. 3 shows a perspective view of the electrode support unit 10. The electrode support unit 10 comprises a truss 16 made of sheet metal strips 17, 18. A first kind of sheet metal strips 17 form webs that are arranged substantially vertically in an operational state of the cell 1. The webs 17 have bent edges to connect to the back wall 4 and the electrode 9, respectively. The bent edges thus may form the contact surfaces 12 for the surface contact connection 11. The webs 17 are connected to each other by a second kind sheet metal strips 18 as cross bars that stabilize the truss 16. The cross bars 18 are preferably of a rather small cross section in order to avoid significant obstruction of the electrolyte flow within the cell 1.

In Fig. 4, a second embodiment of the electrolysis cell 1 according to the invention is shown. In contrast to the first embodiment, not only the electrical connection between the electrode support unit 10 and the electrode 9, but also between the electrode support unit 10 and the back wall 4 is established by a surface contact connection 11. Thereby the manufacturing effort for the cell 1 is further reduced and welding errors that may lead to leakages of the cell 1 are avoided. Electrode 9 and electrode support unit 10 can simply be removed and replaced.

A further difference to the first embodiment is that the surface contact connection 11 is secured by a mechanical joint 15. The mechanical joint 15 is a separable mechanical joint, preferably a hooked or clamped connection. In the shown example, protruding parts of the electrode support unit 10 are introduced into eyelets fixed to the back wall 4 to secure the surface contact connection 11.

In all other respects, the above description concerning the first embodiment applies to the second embodiment, as well.

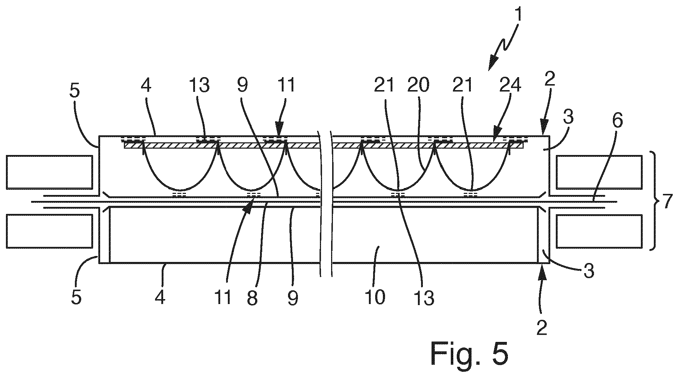

Fig. 5 shows a third embodiment of the inventive electrolysis cell 1. In this embodiment, the electrode support unit 10 comprises arc springs 20 that are convexly arched towards the electrode 9 to provide a resilient support surface 21. The arc springs 20 are mounted on a basic framework 24 that may be formed by a truss of sheet metal strips.

In all other respects, the above description concerning the first to third embodiment applies to the fourth embodiment, as well.

The electrolysis cells 1 shown in the drawings are of the single element type, i.e. both cell elements 2 form a separately sealed single cell. However, the invention is applicable in the same way to electrolysis cells of a filter-press electrolyzer. In this case, the cell elements are the bipolar plates forming the separating wall between adjacent cells.

### List of Reference Signs

- 1: electrolysis cell
- 2: cell element
- 3: electrode chamber
- 4: back wall
- 5: sidewall
- 6: separator
- 7: joint of the cell elements
- 8: separating wall
- 9: electrode
- 10: electrode support unit
- 11: surface contact connection
- 12: contact surface
- 13: contact improving coating
- 14: coating carrier layer
- 15: mechanical joint
- 16: truss
- 17, 18: sheet metal strips
- 20: arc spring
- 21: resilient support surface
- 24: basic framework

## Claims

1. Electrolysis cell for chlor-alkali or alkaline water electrolysis comprising
two cell elements (2) each defining an electrode chamber (3) by providing a back wall (4) and sidewalls (5) of the electrode chambers (3), and
a sheet-like separator (6) being interposed in a joint (7) between the two cell elements (2) and providing a separating wall (8) between the electrode chambers (3),
wherein an electrode (9) and an electrode support unit (10) is accommodated in each of the electrode chambers (3), wherein the electrode support units (10) provide an electrical connection between the back wall (4) and the electrode (9) in each of the electrode chambers (3), and wherein the electrodes (9) are in direct contact with the sheet-like separator (6),
**characterized in that**
at least in one of the electrode chambers (3) the electrical connection between the back wall (4) and the electrode support unit (10) is provided by means of a surface contact connection (11),
wherein the electrode support unit (10) comprises a truss (16) made of sheet metal strips (17, 18) or
wherein the electrode support unit (10) comprises arc springs (20) that are convexly arched towards the electrode (9) to provide a resilient support surface (21).

2. Electrolysis cell according to claim 1, **characterized in that** the electrode chamber (3), in which the surface contact connection (11) is provided, is an anode chamber of the electrolysis cell (1) comprising an anode as electrode (9).

3. Electrolysis cell according to claim 1 or 2, **characterized in that** the surface contact connection (11) comprises a contact surface (12) that is equipped at least in part with a contact improving coating (13).

4. Electrolysis cell according to claim 3, **characterized in that** the contact improving coating (13) contains one or more of the materials gold, silver, platinum, ruthenium, palladium and NiV7.

5. Electrolysis cell according to claim 3 or 4, **characterized in that** the contact improving coatings (13) are provided on both mutually touching contact surfaces (12) of the surface contact connection (11).

6. Electrolysis cell according to any one of claims 3 to 5, **characterized in that** the contact improving coating (13) is provided on an intermediary coating carrier layer (14) that is attached in a material bond to the back wall (4), the electrode support unit (10) and/or the electrode (9), respectively.

7. Electrolysis cell according to any one of the claims 1 to 6, **characterized in that** the surface contact connection (11) is secured by a mechanical joint (15).

8. Electrolysis cell according to claim 7, **characterized in that** the mechanical joint (15) is a separable mechanical joint.

9. Electrolysis cell according to claim 8, **characterized in that** the mechanical joint (15) is a hooked or clamped connection.

10. Electrolysis cell according to any one of the claims 1 to 9, **characterized in that** the back wall (4), the electrode support unit (10), and/or the electrode (9) are made from nickel or titanium.

## Patentansprüche

1. Elektrolysezelle für die Chloralkali- oder alkalische Wasserelektrolyse, umfassend
zwei Zellenelemente (2), die jeweils eine Elektrodenkammer (3) definieren, indem sie eine Rückwand (4) und Seitenwände (5) der Elektrodenkammern (3) bereitstellen, und
einen flächigen Separator (6), der in einer Verbindung (7) zwischen den zwei Zellenelementen (2) angeordnet ist und eine Trennwand (8) zwischen den Elektrodenkammern (3) bereitstellt,
wobei in jeder der Elektrodenkammern (3) eine Elektrode (9) und eine Elektrodenstützeinheit (10) aufgenommen sind, wobei die Elektrodenstützeinheiten (10) eine elektrische Verbindung zwischen der Rückwand (4) und der Elektrode (9) in jeder der Elektrodenkammern (3) bereitstellen, und wobei die Elektroden (9) in direktem Kontakt mit dem flächigen Separator (6) stehen,
**dadurch gekennzeichnet, dass**
zumindest in einer der Elektrodenkammern (3) die elektrische Verbindung zwischen der Rückwand (4) und der Elektrodenstützeinheit (10) mittels einer Flächenkontaktverbindung (11) bereitgestellt wird,
wobei die Elektrodenstützeinheit (10) ein Gitterwerk (16) aus Blechstreifen (17, 18) umfasst oder
wobei die Elektrodenstützeinheit (10) Bogenfedern (20) umfasst, die konvex zur Elektrode (9) hin gewölbt sind, um eine federnde Stützfläche (21) bereitzustellen.

2. Elektrolysezelle nach Anspruch 1, **dadurch gekennzeichnet, dass** die Elektrodenkammer (3), in der die Flächenkontaktverbindung (11) bereitgestellt ist, eine Anodenkammer der Elektrolysezelle (1) ist, die eine Anode als Elektrode (9) umfasst.

3. Elektrolysezelle nach Anspruch 1 oder 2, **dadurch gekennzeichnet, dass** die Flächenkontaktverbindung (11) eine Kontaktfläche (12) umfasst, die zumindest teilweise mit einer kontaktverbessernden Beschichtung (13) versehen ist.

4. Elektrolysezelle nach Anspruch 3, **dadurch gekennzeichnet, dass** die kontaktverbessernde Beschichtung (13) eines oder mehrere der Materialien Gold, Silber, Platin, Ruthenium, Palladium und NiV7 enthält.

5. Elektrolysezelle nach Anspruch 3 oder 4, **dadurch gekennzeichnet, dass** die kontaktverbessernden Beschichtungen (13) auf beiden sich gegenseitig berührenden Kontaktflächen (12) der Flächenkontaktverbindung (11) vorgesehen sind.

6. Elektrolysezelle nach einem der Ansprüche 3 bis 5, **dadurch gekennzeichnet, dass** die kontaktverbessernde Beschichtung (13) auf einer zwischengeschalteten Beschichtungsträgerschicht (14) vorgesehen ist, die stoffschlüssig an der Rückwand (4), der Elektrodenstützeinheit (10) und/oder der Elektrode (9) befestigt ist.

7. Elektrolysezelle nach einem der Ansprüche 1 bis 6, **dadurch gekennzeichnet, dass** die Flächenkontaktverbindung (11) durch eine mechanische Verbindung (15) gesichert ist.

8. Elektrolysezelle nach Anspruch 7, **dadurch gekennzeichnet, dass** die mechanische Verbindung (15) eine lösbare mechanische Verbindung ist.

9. Elektrolysezelle nach Anspruch 8, **dadurch gekennzeichnet, dass** die mechanische Verbindung (15) eine Haken- oder Klemmverbindung ist.

10. Elektrolysezelle nach einem der Ansprüche 1 bis 9, **dadurch gekennzeichnet, dass** die Rückwand (4), die Elektrodenstützeinheit (10) und/oder die Elektrode (9) aus Nickel oder Titan hergestellt sind.

## Revendications

1. Cellule d'électrolyse pour l'électrolyse chlore-alcali ou l'électrolyse alcaline de l'eau, comprenant
deux éléments de cellule (2), définissant chacun une chambre d'électrode (3) en fournissant une paroi arrière (4) et des parois latérales (5) des chambres d'électrode (3), et
un séparateur en forme de feuille (6), disposé dans un joint (7) entre les deux éléments de cellule (2) et fournissant une paroi de séparation (8) entre les chambres d'électrode (3),
une électrode (9) et une unité de support d'électrode (10) étant logées dans chacune des chambres d'électrode (3), les unités de support d'électrode (10) fournissant une connexion électrique entre la paroi arrière (4) et l'électrode (9) dans chacune des chambres d'électrode (3), et les électrodes (9) étant en contact direct avec le séparateur en forme de feuille (6),
**caractérisée en ce que**
dans au moins une des chambres d'électrode (3), la connexion électrique entre la paroi arrière (4) et l'unité de support d'électrode (10) est fournie au moyen d'une connexion de contact de surface (11),
l'unité de support d'électrode (10) comprenant un treillis (16) constitué de bandes de tôle (17, 18) ou
l'unité de support d'électrode (10) comprenant des ressorts en arc (20), qui sont courbés de manière convexe vers l'électrode (9), afin de fournir une surface d'appui résiliente (21).

2. Cellule d'électrolyse selon la revendication 1, **caractérisée en ce que** la chambre d'électrode (3), dans laquelle la connexion de contact de surface (11) est fournie, est une chambre d'anode de la cellule d'électrolyse (1), comprenant une anode comme électrode (9).

3. Cellule d'électrolyse selon la revendication 1 ou 2, **caractérisée en ce que** la connexion de contact de surface (11) comprend une surface de contact (12), qui est pourvue au moins en partie d'un revêtement améliorant le contact (13).

4. Cellule d'électrolyse selon la revendication 3, **caractérisée en ce que** le revêtement améliorant le contact (13) contient un ou plusieurs des matériaux or, argent, platine, ruthénium, palladium et NiV7.

5. Cellule d'électrolyse selon la revendication 3 ou 4, **caractérisée en ce que** les revêtements améliorant le contact (13) sont prévus sur les deux surfaces de contact (12) de la connexion de contact de surface (11), se touchant mutuellement.

6. Cellule d'électrolyse selon l'une quelconque des revendications 3 à 5, **caractérisée en ce que** le revêtement améliorant le contact (13) est prévu sur une couche porteuse de revêtement intermédiaire (14), qui est fixée par liaison matérielle à la paroi arrière (4), à l'unité de support d'électrode (10) et/ou à l'électrode (9), respectivement.

7. Cellule d'électrolyse selon l'une quelconque des revendications 1 à 6, **caractérisée en ce que** la connexion de contact de surface (11) est assurée par une liaison mécanique (15).

8. Cellule d'électrolyse selon la revendication 7, **caractérisée en ce que** la liaison mécanique (15) est une liaison mécanique démontable.

9. Cellule d'électrolyse selon la revendication 8, **caractérisée en ce que** la liaison mécanique (15) est une liaison à crochet ou à serrage.

10. Cellule d'électrolyse selon l'une quelconque des revendications 1 à 9, **caractérisée en ce que** la paroi arrière (4), l'unité de support d'électrode (10) et/ou l'électrode (9) sont fabriquées en nickel ou en titane.
